# EUROPÄISCHE PATENTSCHRIFT

(11) **EP 0 396 799 B1**
(45) Veröffentlichungstag und Bekanntmachung des Hinweises auf die Patenterteilung: **01.03.1995**
(21) Anmeldenummer: 89108471.7
(22) Anmeldetag: 11.05.1989
(51) Int. Cl.: G09B 23/18

(54) **Modell zum Üben der künstlichen Beatmung sowie Nachbildung eines Beatmungstraktes hierfür**
Model for practising artificial respiration, and respiratory tract simulator therefor
Modèle pour l'apprentissage de la respiration artificielle et simulateur du système respiratoire pour celui-ci

(43) Veröffentlichungstag der Anmeldung: 14.11.1990
(73) Patentinhaber: ASMUND S. LAERDAL A/S, 4000 Stavanger (NO)
(72) Erfinder: Johnsen, Malvin, Ing., N-4001 Stavanger (NO)
(74) Vertreter: LOUIS, PÖHLAU, LOHRENTZ & SEGETH

(56) Entgegenhaltungen:
- EP-A- 0 287 058
- CH-A- 362 554
- DE-U- 8 809 543
- US-A- 3 152 404
- US-A- 4 001 950
- US-A- 4 711 237

## Beschreibung

Die Erfindung befasst sich mit einem Modell zum Üben der künstlichen Beatmung mittels der Mund-zu-Mund- oder Mund-zu-Nase-Beatmungstechnik. Weiterhin befasst sich die Erfindung mit einer Nachbildung zumindest eines Teiles oder des ganzen Beatmungstraktes für ein derartiges Modell.

### Hintergrund der Erfindung (Stand der Technik) :

Aus der US-A 40 01 950 ist ein Modell zum Üben der künstlichen Beatmung nach der Mund-zu-Mund- oder Mund-zu-Nase-Beatmungstechnik bekannt, das zumindest aus einem Teil-Korpus besteht, welcher den Kopf, den Brustkorb und die Lunge eines Menschen nachbildet. Der Beatmungstrakt, der die Lunge einbeschließt, ist durch einen in dem Brustkorb untergebrachten, gegen einen elastischen Widerstand aufblasbaren Sack gebildet, der mit dem hohlen Kopf-Innenraum über eine die Trachea nachbildende Leitung verbunden ist. Der Teil des Kopfes, der die Mund-und/oder Nasenöffnungen enthält, ist lösbar mit dem Kopf verbunden und weist eine Verbindungsvorrichtung für eine aufblasbare Blase auf, die im Kopfinneren untergebracht ist. Ein Übender kann die Blase durch die Mund/Nasen-Öffnung hindurch aufblasen, wodurch im Kopfinneren befindliche Luft in die Lungennachbildung hinein verdrängt und dadurch eine künstliche Beatmung eines Menschen simuliert wird.

Ein wesentlicher Vorteil dieses bekannten Modells besteht darin, daß derjenige Teil des sich von der Mund/Nasen-Öffnung bis zur Lungennachbildung erstreckenden Beatmungstraktes, der mit der Beatmungsluft des Übenden und mit dessen Mund in Berührung kommt, austauschbar ist. Somit besteht für jeden neuen Übenden keinerlei Gefahr einer Ansteckung oder Infektion durch an dem oder in dem Modell vom Vorgänger zurückgebliebene Viren oder Bakterien, weil der austauschbare Teil des Beatmungstraktes, nämlich die Blase, zusammen mit dem Mund/Nasenteil ausgetauscht werden kann. Ggf. wird auch nur die Blase ausgetauscht und weggeworfen, während der Mund/Nasenteil gereinigt und desinfiziert wird.

Dieses bekannte Modell zum Üben der Beatmungstechnik verursacht nicht unbeträchtliche Kosten, die zu einer Verteuerung bei seiner Anwendung führen. Denn obwohl an die austauschbare Blase bezüglich ihrer mechanischen Eigenschaften nur geringe Anforderungen gestellt werden, muß ihr Inneres physiologisch einwandfrei sauber und am besten steril sein, da im Laufe der künstlichen Beatmung ihr Inhalt zu dem Übenden zurückströmt und dessen Mund kontaminieren kann. Vor allem aber muß der Mund/Nasenteil aus einem physiologisch einwandfreien Werkstoff bestehen und vor der Benutzung steril sein. Auch muß er luftdicht in den Kopf des Modells einpaßbar sein, was eine exakte Formgebung und ausreichende mechanische Festigkeit voraussetzt, weil andernfalls der durch das Aufblasen der Blase im Kopfinneren verdrängte Luftanteil nicht vollständig in die Lungennachbildung gedrückt wird, sondern aus dem Kopf entweichen kann und dadurch ein falsches Bild der künstlichen Beatmung vermittelt. Diese Anforderungen an die Präzision der Formgebung und an die Qualität des verwendeten Werkstoffes sowie an eine einwandfreie Lagerung des Mund/Nasenteils und die damit einzusetzenden Blasen erhöhen die Kosten über einen Betrag hinaus, der im allgemeinen für Wegwerfteile als akzeptabel angenommen wird. Rechnet man außerdem den Stapelbedarf der in ausreichender Menge auf Lager zu haltenden Blasen sowie die Auswechselzeit, die ein Ausbilder für den Austausch einer gebrauchten Blase gegen eine neue benötigt, hinzu, so erhält man die vorstehend erwähnten verhältnismässig hohen Gesamtkosten, die sich verteuernd auf die Ausbildung und Unterweisung in der künstlichen Beatmungstechnik auswirken.

### Zusammenfassung der Erfindung:

Aufgabe der vorliegenden Erfindung ist es daher, ein Modell der eingangs beschriebenen Art und auch eine Nachbildung zumindest eines Teils des Beatmungstraktes vorzuschlagen, deren Gesamtkosten niedriger als diejenigen des vorstehend geschilderten bekannten Modells sind, ohne daß jedoch die Sicherheit gegen Ansteckung und Infektion der Übenden beeinträchtigt ist.

Erfindungsgemäß wird diese Aufgabe nach einem ersten Aspekt der Erfindung gelöst durch die Merkmale gemäß dem Patentanspruch 1.

Demnach schlägt die Erfindung vor, daß eine Vielzahl von Blasen, die zumindest einen Teil des Beatmungstraktes des Modells darstellen, in einer fortlaufenden Bahn aneinanderhängen und flachliegend zu einer Rolle aufgewickelt sind, die im Inneren des Modells drehbar gelagert werden kann. Infolge des Aufwickelns in flachliegender Form kann eine sehr grosse Anzahl von Blasen äußerst platzsparend auf einer einzigen Rolle untergebracht werden, wobei eine Kontamination auch über längere Zeit hinweg durch den Wickeldruck und die dicht aneinanderliegenden Wickelschichten ausgeschlossen ist. Da die Wickelrolle zudem im Inneren des Modells untergebracht ist, ist außerhalb davon kein gesonderter Staubedarf erforderlich, was sich platz- und damit kostensparend auswirkt. Die einzelnen Blasen in der Bahn hängen jeweils mit dem Ende ihres Einblasansatzes an dem geschlossenen hinteren Ende der in Abwickelrichtung vorangehenden Blase und sind mit dieser trennbar verbunden.

Jede Blase verengt sich anschließend an den Einblasansatz zu einer Trachea-Nachbildung und erweitert sich anschließend an die Trachea-Nachbildung erneut zu einer die Lunge nachbildenden Kammer, die an ihrem Ende geschlossen ist. Infolge dieser Ausbildung bedarf es im Inneren des Modells keiner gesonderten elastisch aufblasbaren Lungennachbildung und abweichend von dem eingangs geschilderten bekannten Modell muß das Kopfinnere nach außen nicht luftdicht abgedichtet sein. In beiden Fällen ist auch das Auswechseln gebrauchter Blasen erheblich einfacher als bei dem bekannten Modell. Wenn ein Übender seine Beatmungsversuche an dem Modell beendet hat, braucht der Ausbildende die benutzte Blase nur an den außerhalb der Mund- oder Nasenöffnung befindlichen Wandteilen des Einblasansatzes zu erfassen und daran die Blase aus dem Inneren des Modells soweit herauszuziehen, daß die umlegbaren Wandteile des Einblasansatzes der nächsten Blase erscheinen. Daraufhin kann diese nächste Blase von der herausgezogenen Blase abgeschnitten oder - wenn eine Trennlinie vorgeprägt oder perforiert ist - abgerissen werden. Die genannten Wandteile des Einblasansatzes werden dann wiederum auf die an die Mund- oder Nasenöffnung angrenzenden Gesichtspartien umgelegt, wonach das Modell für den nächsten Übenden zur Benutzung bereit ist. Da die Beatmungsluft des zuvor Übenden nur mit dem Inneren der inzwischen herausgezogenen und weggeworfenen Blase in Berührung gekommen ist und auch sein Mund nur mit den umgeklappten Wandteilen dieser Blase nicht jedoch mit den darunter befindlichen Gesichtspartien des Modells selbst in Kontakt war, besteht für den nächsten Übenden keinerlei Ansteckungsgefahr.

Nach einer besonders vorteilhaften und kostengünstigen Ausführungsform weist der Einblasansatz jeder Blase von seinem stirnseitigen Rand ausgehend zwei einander gegenüberliegend angeordnete, in Bahnlängsrichtung verlaufende Schlitze oder Trennlinien auf, die jeweils zusammen mit dem Stirnrand des Einblasansatzes einander gegenüberliegende Wandteile des Einblasansatzes begrenzen. Diese Wandteile können, ggf. nach Aufreißen längs der genannten Trennlinien, auf die an die Mund- und/oder Nasenöffnung angrenzenden Gesichtspartien des Kopfes umgelegt werden, wenn der Einblasansatz z.T. durch die Mund- und/oder Nasenöffnung aus dem Kopfinneren herausgezogen ist. Diese umlegbaren Wandteile des Einblasansatzes decken somit die an die Mund- und/oder Nasenöffnung angrenzenden Gesichtspartien des Kopfes ab und bilden auf diese Weise einen einwandfreien Schutz vor einem Kontakt des Übenden mit diesen Gesichtspartien. Bei dieser Ausführungsform kann somit auf eine austauschbare Gestaltung des die Mund/Nasenöffnung enthaltenden Teils völlig verzichtet werden, was zu einer erheblichen Verbilligung führt.

Auch wenn nach einer weiteren Ausführungsform der Erfindung ein austauschbarer Mund/Nasenteil vorgesehen ist, der eine Verbindungsvorrichtung für den Einblasansatz der Blase aufweist, können die Gesamtkosten niedriger als nach dem Stand der Technik gehalten werden, sofern die Blase in der zuvor geschilderten Weise den Beatmungstrakt bis hin zur Lunge nachbildet. Denn in diesem Fall muß der Mund/Nasenteil nicht luftdicht mit der entsprechenden Öffnung im Kopf des Modells verbunden sein, wodurch geringere Anforderungen an die Präzision der Formgebung und an die mechanischen Eigenschaften des Werkstoffes für den Mund/Nasenteil gestellt werden. Damit kann der Mund/Nasenteil billiger als nach dem Stand der Technik ausgeführt werden.

Die fortlaufende Bahn, die aus den aneinanderhängenden Blasen zusammengesetzt ist, kann aus einer Schlauchfolie oder aus einer Folien-Doppellage gebildet werden. Dabei können die einzelnen Blasen in der Bahn unmittelbar bei der Herstellung der Schlauchfolie oder der Folien-Doppellage, z.B. bei deren Extrusion, erzeugt werden. So wird man beispielsweise bei der Extrusion einer Schlauchfolie den flachliegenden Schlauch entsprechend der Kontur jeder Blase intermittierend seitlich sowie querverlaufend an den späteren Blasenrändern verschweißen und ggf. die an den Seitenrändern verbleibenden Reststücke der Schlauchfolie außerhalb der Blasenränder ausstanzen und entfernen. Entsprechend können ggf. von vornherein die notwendigen Schwächungs- oder Trennlinien hinter der das Blasenende bildenden Querschweißnaht vorgesehen werden, die nach dem Abtrennen der jeweils vorangehenden Blase später den freien Rand des Einblasansatzes bilden. Ist die Blase so ausgebildet, daß sie nur einen Teil des Beatmungstraktes bildet, z.B. sich nur bis in das Kopfinnere des Modells erstreckt, dann bedarf es allenfalls im Bereich des Einblasansatzes der Blase einer seitlichen Abschweißung der Schlauchfolie, während im übrigen die Seitenränder des flachliegenden Schlauches auch die Begrenzung der Blase bilden.

Als Werkstoff für die Blase eignet sich jeder physiologisch einwandfreie thermoplastische Kunststoff, z.B. PVC, Polyäthylen, Polyurethan und dgl. Die durch die Blasen gebildete Bahn kann unmittelbar nach dem Herstellungsvorgang bereits zu Rollen mit einer grösseren Stückzahl von Blasen aufgewickelt werden, so daß die durch die Extrusionstemperatur der Schlauchfolie erzielte Sterilität der Blasen in der Rolle erhalten bleibt. Zweckmässig ist es dabei, die Rolle mit einer entsprechenden Achse zu verwenden, die sich ohne weiteres in die in dem Modell vorgesehene Lagerung einfügen lässt.

Weitere Vorteile und Merkmale der vorliegenden Erfindung ergeben sich aus der nachfolgenden Beschreibung von Ausführungsbeispielen anhand der beiliegenden Zeichnungen sowie aus den Unteransprüchen.

### Kurzbeschreibung der Zeichnungen:

In den Zeichnungen zeigen
- Fig. 1: eine schematische Darstellung einer auf der Rolle aufgewickelten Blasenbahn, von der zwei Blasen bereits abgewickelt sind;
- Fig. 2: in gegenüber Fig. 1 erheblich verkleinertem Maßstab eine Teildarstellung der fortlaufenden Blasenbahn im abgewickelten Zustand;
- Fig. 3: eine Seitenansicht eines Modells zur Übung der künstlichen Beatmung mit einer schematischen Darstellung der Anordnung der Bahn innerhalb des Modells und deren Verlauf darin;
- Fig. 4: eine Draufsicht auf das Modell gemäß Fig. 3;
- Fig. 5: eine zu Fig. 3 analoge Darstellung einer anderen Ausführungsform des Modells, bei dem der Mund/Nasenteil auswechselbar ausgebildet ist, und
- Fig.6: eine Teildarstellung, teilweise geschnitten, einer Verbindungsvorrichtung für den Einblasansatz an dem Mund/Nasenteil.

### Beschreibung der bevorzugten Ausführungsbeispiele:

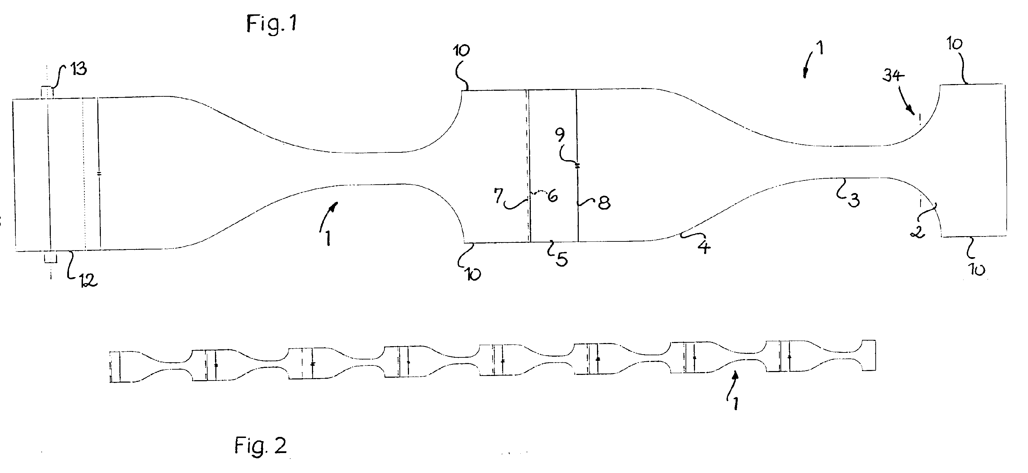

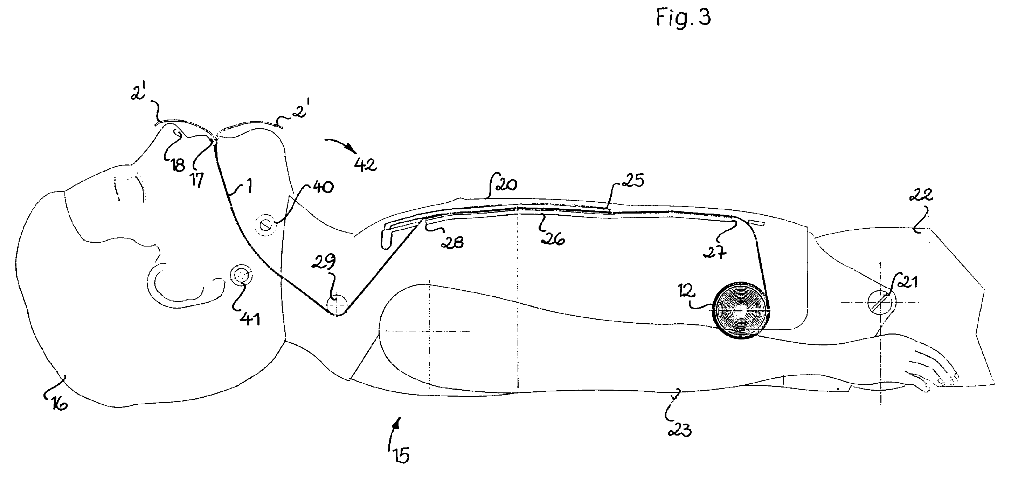

Die Fig. 1 und 2 zeigen Teilansichten einer durch zusammenhängende erfindungsgemässe Blasen 1 gebildeten Bahn, in der die Blasen 1 jeweils den ganzen Beatmungstrakt innerhalb des in den Fig. 3 bis 5 dargestellten Modells bilden. Die Blasen 1 bilden in der dargestellten Form eine flachliegende Bahn und weisen jeweils einen Einblasansatz 2, eine sich daran anschließende Trachea-Nachbildung 3 mit gegenüber dem Einblasansatz 2 erheblich verringerter Breite, eine sich von der Trachea-Nachbildung 3 ausgehend wieder zunehmend verbreiternde Kammer 4, die die Lunge nachbildet, und eine an die Kammer 4 anschließende weitere Kammer 5 auf, die den Magen simuliert. Die Kammer 5 ist gegenüber der nächstfolgenden Blase 1 durch eine Querschweißnaht 6 dicht verschlossen; parallel zu der Querschweißnaht 6 und unmittelbar anschließend an diese verläuft eine Perforationslinie 7, die eine Trennlinie bildet und ein einfaches Abreißen der vorangehenden, d.h. in Fig. 1 rechts dargestellten Blase 1 ermöglicht. Die Lungenkammer 4 ist von der Magenkammer 5 durch eine querverlaufende Schweißnaht 8 bis auf eine darin vorgesehene kurze Unterbrechung 9 getrennt. Die Unterbrechung 9 bildet eine Drosselöffnung, durch die hindurch beim Aufblasen der Lungenkammer 4 Beatmungsluft langsam in die Magenkammer 5 eintreten kann. Die beiden gegenüberliegenden Seitenränder 10 des Einblasansatzes 2 sind offen, d.h. der Einblasansatz 2 ist über seine Länge von der Perforationslinie 7 bis zu dem Punkt, an dem der Übergang zu der Trachea-Nachbildung 3 ansetzt, geschlitzt.

Die aus lauter Blasen 1 bestehende zusammenhängende Bahn ist zu einem Wickel 12 mit einer Achse 13 aufgewickelt. Der Wickel 12 ist in dem hohlen Innenraum eines im Ganzen mit 15 bezeichneten Modells auf eine Weise gelagert, die eine Drehung der Wickelachse 13 und damit ein Abwickeln der aus Blasen 1 gebildeten Bahn ermöglicht. Die Lagerung ist nicht näher dargestellt, da sie für den Fachmann offensichtlich ist. Das Modell 15 umfasst in dem dargestellten Ausführungsbeispiel einen Kopf 16 mit einer Mundöffnung 17 und einer Nasenöffnung 18, einen Brustkorb 20, der mittels eines Gelenks 21 mit nicht näher dargestellten Beinen 22 verbunden ist, sowie Arme 23.
Aufbau und Werkstoff für die geschilderten einzelnen Teile des Modells 15 bilden keinen Teil der vorliegenden Erfindung und sind im Stand der Technik hinreichend bekannt, so daß es hier einer näheren Erläuterung nicht bedarf.

Unterhalb der oberen Begrenzungswand des Brustkorbes 20 ist im Inneren des Modells eine die Rippen eines Menschen nachbildende Rippenplatte 25 befestigt, unter der eine Führungsplatte 26 verläuft, die sich im wesentlichen von dem kopfseitigen Ende der Rippenplatte 25 über deren bauchseitiges Ende hinaus bis über den Wickel 12 erstreckt. Relativ genau über dem Wickel 12 weist die Führungsplatte 26 ein querverlaufendes Langloch 27 auf; der kopfseitige Rand der Führungsplatte 26 ist halbkreisförmig und in dessen Nähe befindet sich ein weiteres querverlaufendes Langloch 28, das an beiden Enden unter einem Winkel von etwa 45° zur Bauchseite hin abgewinkelt ist.

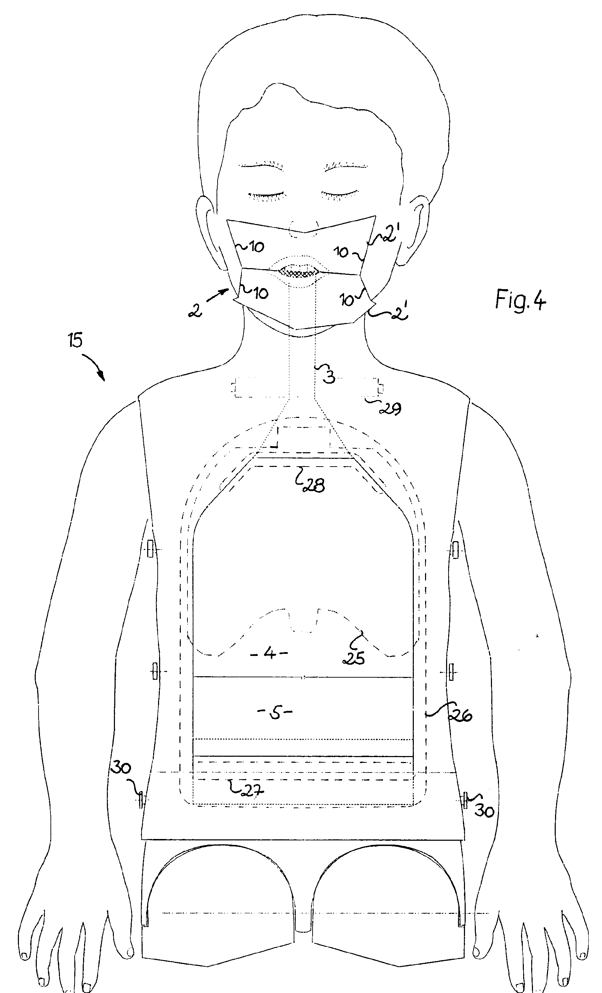

Die Rippenplatte 25 und die Führungsplatte 26 bilden zwischen sich einen Führungsspalt und die aus den zusammenhängenden Blasen 1 bestehende Bahn, die von dem Wickel 12 abgewickelt ist, verläuft von unten durch das Langloch 27 der Führungsplatte 26, durchsetzt der Länge nach den zwischen den Platten 25 und 26 befindlichen Führungsspalt, verläuft dann von oben nach unten durch das kopfseitige Langloch 28, ist um eine im Hals des Modells 15 drehbar gelagerte Umlenkrolle 29 herumgeführt und schließlich durch die Mundöffnung 17 soweit nach außen gezogen, daß sich der gesamte Einblasansatz 2 jeder Blase 1 außerhalb des Kopfes 16 befindet. Wie aus den Fig. 3 und 4 hervorgeht, sind die Wandteile 2′ des Einblasansatzes 2 längs der Schlitzränder 10 voneinander getrennt und auf die an die Mundöffnung 17 angrenzenden Gesichtspartien des Kopfes 16 umgefaltet oder umgelegt. Auf diese Weise ist über diesen Gesichtspartien eine geschlossene, durch die Innenseiten der Wandteile 2′ gebildete Fläche erzeugt, die in ihrer Mitte die Mündung zu der Trachea-Nachbildung 3 der Blase 1 enthält. Wie aus Fig. 4 zu erkennen ist, ist der Einblasansatz 2 in seiner Breite und Länge so groß bemessen, daß eine hinreichend grosse Gesichtspartie davon bedeckt werden kann und keine Gefahr besteht, daß an die Mundöffnung 17 angrenzende Gesichtspartien von dem Mund eines Übenden unmittelbar berührt werden.

Die Rippenplatte 25 besteht aus einem elastisch nachgiebigen Werkstoff, z.B. einem Elastomer, und kann sich beim Aufblasen der Lungenkammer 4 während der Beatmung, die sich zwischen der Rippenplatte 25 und der Führungsplatte 26 befindet, in einer der natürlichen Atmungsbewegung eines Menschen angepassten Weise nach oben - in Fig. 3 - verformen. Die Führungsplatte 26 kann aus einem steifen Werkstoff bestehen, um die durch das Aufblasen der Lungenkammer 4 erzeugte Atmungsbewegung voll an die Rippenplatte 25 zu übertragen.

Um das Modell 15 für das Üben der künstlichen Beatmung bereit zu machen, wird zunächst in die im Brustkorb 20 untergebrachte (nicht gezeigte) Lagerung ein Wickel 12 eingelegt. Diese Lagerung ist nach dem Lösen von Befestigungselementen 30 und dem Abheben der oberen Brustkorbbegrenzung zugänglich. Das Abwickelende der ersten Blase 1 des Wickels 12 wird daraufhin durch das Langloch 27 hindurchgezogen, durch den Führungsspalt zwischen der Rippenplatte 25 und der Führungsplatte 26 hindurchgefädelt (was nach einem Anheben der Rippenplatte 25 nach oben unter Ausnutzung von deren Elastizität möglich ist) durch das kopfseitige Langloch 28 hindurchgesteckt und schließlich um die Umlenkrolle 29 herumgelegt. Zuletzt wird das Abwickelende von dem durch den Halsansatz zugänglichen Kopfinnenraum aus durch die Mundöffnung 17 nach außen gesteckt. Von diesem Zeitpunkt an können allein durch Ziehen an dem außerhalb der Mundöffnung 17 befindlichen Teil der Blase 1 eine Vielzahl von weiteren Blasen 1 von dem Wickel 12 abgewickelt und in die richtige Position im Inneren des Modells 15 gebracht werden. Die Länge jeder Blase 1 ist so auf die Abmessungen des Modells 15 abgestimmt, daß sich nach dem Herausziehen des Einblasansatzes 2 aus der Mundöffnung 17 die Lungenkammer 4 in dem Führungsspalt zwischen der Rippenplatte 25 und der Führungsplatte 26 befindet, während die Magenkammer 5 bauchwärts versetzt außerhalb des Führungsspaltes liegt (vgl. Fig. 4). In einer praktischen Ausführung der Blase 1 weist diese eine Gesamtlänge von 50 cm, eine Breite des Einblasansatzes 2 von 15 cm, eine Breite der Trachea-Nachbildung 3 von 3,5 cm und eine Breite der Lungenkammer 4 sowie der Magenkammer 5 von etwa 15 cm auf. Der Längsabstand der die Magenkammer 5 bildenden Schweißnähte 6 und 8 beträgt etwa 5,5 cm, während die die Drosselöffnung 9 bildende Unterbrechung in der Querschweißnaht 8 etwa 0,7 cm lang ist.

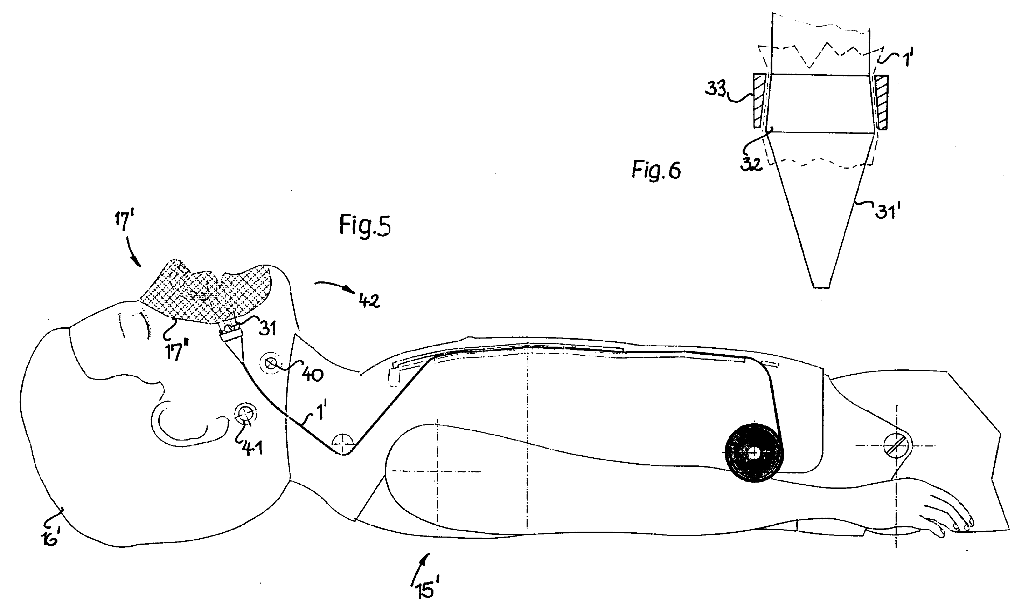

Der Aufbau des in Fig. 5 dargestellten Modells 15′ ist mit Ausnahme der Ausbildung des Mund/Nasenteils 17′ identisch zu dem zuvor beschriebenen Modell 15, so daß sich eine weitere Erläuterung erübrigt. Der Mund/Nasenteil 17′ ist hier lösbar in einer entsprechend formangepassten Ausnehmung 17˝ des Kopfes 16′ angeordnet. Eine Befestigung des Mund/Nasenteils 17′ an dem Rand der Öffnung 17˝ gegen ein Abheben nach oben - in Fig. 5 - und auch eine hermetische Abdichtung des Öffnungsrandes durch den Mund/Nasenteil 17′ sind nicht erforderlich. Der Mund/Nasenteil 17′ braucht sich lediglich auf dem Rand der Ausnehmung 17˝ abzustützen, da er bei der Ausführung einer Beatmungsübung durch den Übenden nur nach unten gedrückt wird.

Der Mund/Nasenteil 17′ weist ausgehend von der Mundöffnung einen in das Kopfinnere gerichteten rohrförmigen Stutzen 31 auf, der sich in einem Endabschnitt 31′ kegelig verjüngt. Vor dem kegeligen Abschnitt 31′ befindet sich ein Abschnitt 32, dessen Außenfläche sich unter einem geringen Winkel zur Längsachse des Stutzens 31 kegelig erweitert. Dem Abschnitt 32 ist ein Klemmring 33 zugeordnet, dessen Innenfläche komplementär konisch zu der Außenfläche des Abschnittes 32 ausgebildet ist und ein gewisses Spiel zu dieser einhält.

Die in dem Modell 15′ verwendeten Blasen unterscheiden sich von denjenigen, die bei dem Modell 15 zur Anwendung kommen, allein dadurch, daß sie nur einen kurzen Einblasansatz vor der Trachea-Nachbildung 3 aufweisen. In Fig. 1 ist bei 34 strichpunktiert die Lage des freien Randes des Einblasansatzes angedeutet. Dieser verkürzte Einblasansatz wird bei abgenommenem Mund/Nasenteil 17′ ergriffen, auf den konischen Abschnitt 31′ des Stutzens 31 aufgesteckt und bis über den Abschnitt 32 hinweg gezogen. Zu dieser Zeit ist der Klemmring 33 noch weiter zurückgeschoben. Anschließend wird der Klemmring 33 über den Einblasansatz hinweggestülpt und fest an die Außenfläche des Abschnittes 32 axial angedrückt, so daß der Einblasansatz luftdicht an dem Stutzen 31 festgeklemmt ist. Der geringe Winkel, unter dem sich der Abschnitt 32 nach außen konisch erweitert, sorgt für die notwendige Selbsthemmung, die ein ungewolltes Zurückweichen des Klemmringes 33 verhindert.

Der Austausch einer gebrauchten Blase gegenüber einer neuen Blase erfolgt in analoger Weise wie zuvor beschrieben. Hierbei wird der Mund/Nasenteil 17′ von der Ausnehmung 17˝ abgehoben und dadurch die gebrauchte Blase zugänglich gemacht. Durch Zurückschieben des Klemmringes 33 kann diese von dem Stutzen 31 abgezogen werden. Daraufhin kann durch weiteres Herausziehen der gebrauchten Blase aus der Ausnehmung 17˝ der Einblasansatz der nächstfolgenden Blase in den Greifbereich gezogen werden, so daß diese in der geschilderten Weise mit einem neuen Mund/Nasenteil 17′ oder mit dem bisher bereits benutzten Mund/Nasenteil nach dessen Reinigung und Desinfizierung verbunden werden kann.

In beiden vorstehend geschilderten Ausführungsbeispielen ist weiterhin eine Vorkehrung getroffen, die die künstliche Beatmung dann verhindert, wenn sich der Kopf 16 bzw. 16′ des Modells nicht in der für eine richtige Beatmung notwendigen, nämlich nach hinten gekippten Stellung befindet. Eine solche Stellung des Kopfes - oder ein deutlich angehobenes Kinn - des Patienten ist bei der künstlichen Beatmung Voraussetzung dafür, daß die durch die Mund/Nasenöffnung eingeblasene Beatmungsluft die Trachea tatsächlich passieren kann und in die Lungen gelangt. Aus diesem Grund ist an den bekannten Modellen zur künstlichen Beatmung zur Einübung der richtigen Kopf- und/oder Kinnhaltung der Kopf bzw. das Kinn des Modells in dem entsprechenden Sinn bewegbar angeordnet.

Auch bei den hier besprochenen Ausführungsbeispielen ist der Kopf 16 bzw. 16′ um eine zur Zeichenebene in den Fig. 3 und 5 senkrecht stehende Achse verschwenkbar, die mit der Achse der Umlenkrolle 29 zusammenfällt. Einzelheiten dieser Schwenklagerung sind nicht dargestellt, weil diese im Stand der Technik bekannt ist. Erfindungsgemäß ist aber in dem Halsansatz des Brustkorbes 20, parallel zu der Umlenkwalze 29, eine Quetschrolle 40 drehbar oder nicht drehbar gelagert und eine entsprechend ausgebildete und gelagerte Quetschrolle 41 befindet sich in dem Kopf 16 bzw. 16′ und ist folglich zusammen mit diesem relativ zu der erstgenannten Quetschrolle 40 zu dieser hin und von dieser weg bewegbar. In der in den Fig. 3 und 5 gezeigten, nach hinten gekippten Stellung des Kopfes 16 bzw. 16′ erstreckt sich die Trachea-Nachbildung 3 frei zwischen den beiden Quetschrollen 40 und 41 hindurch, so daß ein ungehindertes Einblasen von Luft möglich ist. Nimmt jedoch der Kopf 16, 16′ eine Stellung ein, in der das Kinn in Richtung des Pfeiles 42 zur Brust hin gedrückt ist, dann befindet sich die Quetschrolle 41 in Anlage an der Quetschrolle 40 und klemmt dabei die Trachea-Nachbildung ein, so daß ein Einblasen von Luft in die Lungenkammer 4 nicht möglich ist. Diese Kopfhaltung entspricht derjenigen natürlichen Kopfhaltung eines Menschen, in der die Trachea durch Zusammendrücken obstruiert ist. Der Übende kann diese für die künstliche Beatmung unbrauchbare Kopfhaltung sofort bemerken, da infolge fehlenden Aufblasens der Lungenkammer 4 die geschilderte Ausdehnung bzw. das Anheben der Rippenplatte 25 nicht fühlbar ist, was ebenfalls der natürlichen Reaktion eines zu beatmenden Patienten entspricht. Der Übende kann somit daraufhin die Kopfhaltung korrigieren.

Da bei einem Menschen der Luftweg durch die Trachea auch dann freigegeben wird, wenn das Kinn betont hochgehoben wird - was normalerweise auch zu einem Verschwenken des Kopfes führt - kann anstelle der Verschwenkbarkeit des Kopfes 16, 16′ oder zusätzlich dazu das Kinn beweglich angeordnet sein, wobei eine der Quetschrollen, z.B. die Quetschrolle 41, in dem beweglichen Kinn gelagert ist. Dadurch kann auch mit dem Anheben des Kinns die Quetschrolle 41 in Kontakt mit der Quetschrolle 40 gebracht werden, so daß die Trachea-Nachbildung dazwischen eingequetscht und blockiert wird.

Die Quetschrollen 40, 41 können auf ihrem Umfang mit einer nachgiebigen Schicht, z.B. aus elastomerem Kunststoff, belegt sein, um einerseits das natürliche Verhalten des Halsinneren eines Menschen zu simulieren, andererseits eine Beschädigung der Trachea-Nachbildung 3 auf jeden Fall zu vermeiden.

Es versteht sich, daß der Wickel 12 im Kopfinneren drehbar gelagert ist, wenn beispielsweise die Blasen jeweils nur einen Teil des Beatmungstraktes ohne Lunge und Trachea nachbilden und diese Teile fest in dem Modell installiert sind.

Da bei den beschriebenen Ausführungsbeispielen die obere Brustkorbabdeckung nach Lösung der Befestigungselemente 30 abgehoben werden kann, um das Einsetzen eines Wickels 12 zu ermöglichen, ist das Innere des Modells einschließlich der Platten 25, 26, der Umlenkrolle 29 und der Quetschrollen 40, 41 für Reinigungszwecke zugänglich. Dies ist gegenüber dem eingangs geschilderten Stand der Technik dann von wesentlichem Vorteil, wenn durch übermässiges Aufblasen einer der Blasen 1 diese beschädigt wird und Beatmungsluft, möglicherweise sogar Speichel, in das Innere des Modells eintritt. Eine solche Reinigung ist bei dem bekannten Modell nicht möglich.

## Patentansprüche

1. Modell zum Üben der künstlichen Beatmung mittels der Mund-zu-Mund- oder Mund-zu-Nase-Beatmungstechnik mit den Kopf, den Brustkorb und die Lunge des Menschen nachbildenden Teilen, bei dem zumindest ein Teil des Beatmungstraktes (3, 4) durch eine in dem Modell (15, 15′) untergebrachte, austauschbare Blase (1, 1′) gebildet ist, die über einen Einblasansatz (2) mit der Mund- und/oder Nasenöffnung (17, 18) des Kopfes (16) verbunden und durch diese hindurch aufgeblasen werden kann,
**dadurch gekennzeichnet**,
daß die Blase (1, 1′) anschließend an den Einblasansatz (2) sich zu einer Trachea-Nachbildung (3) verengt und anschließend an die Trachea-Nachbildung zu einer die Lunge nachbildenden Kammer (4) wieder erweitert ist und daß eine Mehrzahl von Blasen (1, 1′) mit ihrem Einblasansatz (2) jeweils mit dem geschlossenen Ende der vorangehenden Blase abtrennbar zusammenhängend zu einer fortlaufenden flachen Bahn zusammengefasst sind und die Bahn zu einem in dem Modell drehbar gelagerten Wickel (12) aufgewickelt ist.

2. Modell nach Anspruch 1,
dadurch gekennzeichnet,
daß der Einblasansatz (2) jeder Blase (1) von seinem freien Rand ausgehend zwei einander gegenüberliegend angeordnete, in Bahnlängsrichtung verlaufende Schlitze oder Trennlinien (10) aufweist und daß die von den Schlitzen oder Trennlinien begrenzten Wandteile (2′) des Einblasansatzes auf die an die Mund- und/oder Nasenöffnung (17, 18) angrenzenden Gesichtspartien des Kopfes (16) umlegbar sind.

3. Modell nach Anspruch 1 oder 2,
dadurch gekennzeichnet,
daß sich an die Lungennachbildung (4) der Blase (1, 1′) eine den Magen nachbildende weitere Kammer (5) anschließt und mit der Lungennachbildung (4) nur über eine Drosselöffnung (9) verbunden ist.

4. Modell nach einem der Ansprüche 1 bis 3,
dadurch gekennzeichnet,
daß der Wickel (12) am bauchseitigen Ende des Brustkorbes (20) austauschbar gelagert ist.

5. Modell nach einem der Ansprüche 1 bis 4,
dadurch gekennzeichnet,
daß der Brustkorb (20) eine die Rippen nachbildende elastisch verformbare oder gegen Federwirkung anhebbare Platte (25) sowie eine unter dieser Platte (25) liegende Führungsplatte (26) enthält und daß die Bahn von Blasen (1, 1′) flach durch den zwischen der Rippenplatte (25) und der Führungsplatte (26) gebildeten Führungsspalt hindurch verläuft.

6. Modell nach Anspruch 5,
dadurch gekennzeichnet,
daß die Führungsplatte (26) in der nähe ihres bauchseitigen Randes ein querverlaufendes Langloch (27) aufweist, durch welches die Bahn hindurchgeführt ist, und daß im Kopf oder Hals des Modells unter der Ebene des genannten Führungsspaltes eine Umlenkrolle (29) für die Bahn drehbar gelagert ist.

7. Modell nach einem der Ansprüche 1 bis 6,
dadurch gekennzeichnet,
daß die Mund- und/oder Nasenöffnung in einem austauschbar in dem Kopf (16′) angeordneten Teil (17′) ausgebildet ist und einen in das Kopfinnere ragenden Stutzen (31) mit einer Verbindungsvorrichtung (32, 33) für den Einblasansatz der Blase (1′) aufweist.

8. Modell nach Anspruch 7,
dadurch gekennzeichnet,
daß die Verbindungsvorrichtung einen Klemmring (33) zum abdichtenden Festklemmen des Einblasansatzes an dem Stutzen (31) aufweist.

9. Modell nach einem der Ansprüche 1 bis 8,
dadurch gekennzeichnet,
daß in einem in den Kopf (16, 16′) ragenden Halsansatz des Brustkorbes (20) eine erste Quetschrolle (40) und in dem Kopf eine zweite Quetschrolle (41) parallel zur ersten Quetschrolle angeordnet sind, daß der Kopf relativ zu dem Halsansatz nach vorne und hinten in eine Obstruktionsstellung bzw. eine Freigabestellung verschwenkbar ist, wobei die Quetschrollen (40, 41) in der Obstruktionsstellung sich in gegenseitigem Kontakt befinden, und daß die Trachea-Nachbildung (3) zwischen den Quetschrollen hindurch verläuft.

10. Modell nach Anspruch 9,
dadurch gekennzeichnet,
daß der Umfang der Quetschrollen mit einem nachgiebigen Material beschichtet ist.

11. Fortlaufende Bahn von zusammenhängenden aufblasbaren Blasen (1, 1′) zur Verwendung als Nachbildung des Beatmungstraktes in einem Modell zum Üben der künstlichen Beatmung, wobei jede Blase (1, 1′) eine an einen Einblasansatz (2) anschließende verengte Trachea-Nachbildung (3) und eine an die Trachea-Nachbildung anschließende wieder verbreiterte Lungennachbildung (4) mit geschlossenem Ende (6) aufweist und die Blasen (1, 1′) flach liegend zu einem Wickel (12) aufgewickelt sind und alle Blasen - mit Ausnahme der das Abwickelende des Wickels (12) bildenden Blase - mit ihrem Einblasansatz (2) jeweils trennbar mit dem geschlossenen Ende der zum Abwickelende hin näheren Blase verbunden sind.

12. Bahn nach Anspruch 11,
dadurch gekennzeichnet,
daß sich an die Lungennachbildung (4) eine Magennachbildung (5) anschließt, die mit der Lungennachbildung nur durch eine Drosselöffnung (9) verbunden ist.

13. Bahn nach einem der Ansprüche 11 und 12,
dadurch gekennzeichnet,
daß sie aus einem flachliegenden Folienschlauch aus einer thermoplastischen Kunststoffolie besteht und das geschlossene Ende jeder Blase (1, 1′) durch eine Querschweißnaht (6) des Folienschlauches gebildet ist.

14. Bahn nach Anspruch 12 oder 13,
dadurch gekennzeichnet,
daß die Magennachbildung (5) durch eine weitere, im Abstand von der ersten Querschweißnaht (6) angebrachte Querschweiß (8) mit einer die Drosselöffnung bildenden Unterbrechung (9) erzeugt ist.

15. Bahn nach einem der Ansprüche 11 bis 14,
dadurch gekennzeichnet,
daß unmittelbar benachbart zu jeder ersten Querschweißnaht (6) eine Perforation (7) als Trennlinie quer über die ganze Breite des Folienschlauches verläuft.

16. Bahn nach einem der Ansprüche 13 bis 15,
dadurch gekennzeichnet,
daß ausgehend von der ersten Querschweißnaht (6) bzw. von der genannten Trennlinie (7) in den gegenüberliegenden Rändern des Folienschlauches in Bahnlängsrichtung Schlitze (10) oder Trennlinien vorbestimmter Länge verlaufen, die umfaltbare Wandteile (2′) des Einblasansatzes (2) begrenzen.

## Claims

1. A model for practising artificial respiration by means of the mouth-to-mouth or mouth-to-nose respiration procedure comprising portions which simulate the head, the thorax and the lungs of a human being, wherein at least one part of the respiratory tract (3, 4) is formed by an interchangeable balloon (1, 1′) which is disposed in the model (15, 15′) and which is connected by way of an inflation connection (2) to the mouth and/or nose opening (17, 18) of the head (16) and can be inflated through said opening, characterised in that the balloon (1, 1′) is reduced in width adjoining the inflation connection (2) to provide a trachea simulation (3) and is enlarged again adjoining the trachea simulation to provide a chamber (4) simulating the lungs, and that a plurality of balloons (1, 1′) are each combined in separable connected relationship with their inflation connection (2) to the closed end of the preceding balloon to form a continuous flat strip and the strip is wound up to form a coil (12) mounted rotatably in the model.

2. A model according to claim 1 characterised in that the inflation connection (2) of each balloon (1), starting from its free edge, has two mutually oppositely disposed slots or separating lines (10) extending in the longitudinal direction of the strip, and that the wall portions (2′) of the inflation connection, which are delimited by the slots or separation lines, can be folded over on to the parts of the face of the head (16), which adjoin the mouth and/or nose opening (17, 18).

3. A model according to claim 1 or claim 2 characterised in that adjoining the lungs simulation (4) of the balloon (1, 1′) is a further chamber (5) which simulates the stomach and is connected to the lungs simulation (4) only by way of a throttle opening (9).

4. A model according to one of claims 1 to 3 characterised in that the coil (12) is replaceably mounted at the end of the thorax (20), which is towards the abdomen.

5. A model according to one of claims 1 to 4 characterised in that the thorax (20) includes a plate (25) for simulating the ribs, the plate being elastically deformable or liftable against a spring action, and a guide plate (26) disposed beneath said plate (25), and that the strip of balloons (1, 1′) extends flat through the guide gap formed between the rib plate (25) and the guide plate (26).

6. A model according to claim 5 characterised in that in the vicinity of its edge towards the abdomen the guide plate (26) has a transversely extending slot (27) through which the strip is guided and that a guide roller (29) for the strip is rotatably mounted in the head or neck of the model beneath the plane of said guide gap.

7. A model according to one of claims 1 to 6 characterised in that the mouth and/or nose opening is formed in a portion (17′) arranged replaceably in the head (16′) and has a connection (31) projecting into the interior of the head, with a connecting means (32, 33) for the inflation connection of the balloon (1′).

8. A model according to claim 7 characterised in that the connecting means has a clamping ring (33) for sealingly clamping the inflation connection fast to the connection (31).

9. A model according to one of claims 1 to 8 characterised in that a first squeeze roller (40) is arranged in a neck projection of the thorax (20), which projects into the head (16, 16′), and a second squeeze roller (41) is arranged in the head parallel to the first squeeze roller, that the head is pivotable relative to the neck projection forwardly and rearwardly into an obstruction position and a release position respectively, wherein the squeeze rollers (40, 41) are in mutual contact in the obstruction position, and that the trachea simulation (3) extends through between the squeeze rollers.

10. A model according to claim 9 characterised in that the periphery of the squeeze rollers is covered with a yielding material.

11. A continuous strip of interconnected inflatable balloons (1, 1′) for use as simulation of the respiratory tract in a model for practising artificial respiration, wherein each balloon (1, 1′) has a constricted trachea simulation (3) adjoining an inflation connection (2) and a lungs simulation (4) with closed end (6), which lungs simulation is enlarged again and adjoins the trachea simulation, and the balloons (1, 1′) are wound up in a flat condition to form a coil (12) and all balloons - with the exception of the balloon forming the unwinding end of the coil (12)-are respectively separably connected with their inflation connection (2) to the closed end of the respective balloon which is nearer to the unwinding end.

12. A strip according to claim 11 characterised in that adjoining the lungs simulation (4) is a stomach simulation (5) which is connected to the lungs simulation only through a throttle opening (9).

13. A strip according to one of claims 11 and 12 characterised in that it comprises a tubular foil in a flat condition and comprising a thermoplastic material and the closed end of each balloon (1, 1′) is formed by a transverse welded seam (6) on the tubular foil.

14. A strip according to claim 12 or claim 13 characterised in that the stomach simulation (5) is produced by a further transverse welded seam (8) which is disposed at a spacing from the first transverse welded seam (6) and which has an interruption (9) forming the throttle opening.

15. A strip according to one of claims 11 to 14 characterised in that perforations (7) extend directly adjacent to each first transverse welded seam (6) as a separating line, transversely over the entire width of the tubular foil.

16. A strip according to one of claims 13 to 15 characterised in that starting from the first transverse welded seam (6) or from said separating line (7) slots (10) or separating lines of predetermined length extend in the oppositely disposed edges of the tubular foil in the longitudinal direction of the strip, the slots or separating lines defining wall portions (2′) of the inflation connection (2), which can be folded over.

## Revendications

1. Modèle pour s'exercer à la respiration artificielle au moyen de la technique respiratoire du bouche à bouche ou du bouche à nez comprenant des pièces imitant la tête, la cage thoracique et les poumons de l'être humain, dans lequel au moins une partie du tractus respiratoire (3, 4) est formée par une poche (1, 1′) échangeable (1, 1′) qui est logée dans le modèle (15, 15′) et qui peut être reliée par l'intermédiaire d'une embouchure de soufflage (2) à l'ouverture de bouche et/ou de nez (17, 18) de la tête (16) et être ainsi gonflée à travers celle-ci, caractérisé en ce que la poche (1, 1′) se rétrécit à la suite de l'embouchure de soufflage (2) en une imitation de trachée (3) et ensuite s'élargit à nouveau, à la suite de l'imitation de trachée, en un compartiment imitant les poumons (4), en ce que plusieurs poches (1, 1′) sont chacune réunies par leur embouchure de soufflage (2) à l'extrémité fermée de la poche précédente d'une manière contiguë, séparable, de façon à former une bande plate continue et en ce que la bande est enroulée en une bobine (12) qui est entreposée de manière à pouvoir tourner dans le modèle.

2. Modèle suivant la revendication 1, caractérisé en ce que l'embouchure de soufflage (2) de chaque poche (1) présente, à partir de son bord libre, deux incisions ou lignes de séparation (10) qui sont agencées l'une en face de l'autre et qui s'étendent dans la direction longitudinale de la bande et en ce que les parties de paroi (2′) de l'embouchure de soufflage, qui sont délimitées par les incisions ou lignes de séparation, peuvent être rabattues sur les parties de visage de la tête (16) qui sont adjacentes à l'ouverture de bouche et/ou de nez (17, 18).

3. Modèle suivant l'une des revendications 1 et 2, caractérisé en ce qu'un compartiment supplémentaire (5) imitant l'estomac se rattache à l'imitation des poumons (4) de la poche (1, 1′) et en ce qu'il est en communication avec l'imitation des poumons (4) uniquement par l'intermédiaire d'un orifice étranglé (9).

4. Modèle suivant l'une des revendications 1 à 3, caractérisé en ce que la bobine (12) est entreposée de manière échangeable à l'extrémité du côté ventre de la cage thoracique (20).

5. Modèle suivant l'une des revendications 1 à 4, caractérisé en ce que la cage thoracique (20) contient une plaque (25) élastiquement déformable qui imite les côtes et qui peut être soulevée à l'encontre d'une action de ressort ainsi qu'une plaque de guidage (26) qui se trouve en dessous de cette plaque (25) et en ce que la bande de poches (1, 1′) s'étend à plat à travers la fente de guidage formée entre la plaque des côtes (25) et la plaque de guidage (26).

6. Modèle suivant la revendication 5, caractérisé en ce que la plaque de guidage (26) présente, à proximité de son bord du côté ventre, un trou allongé (27) qui s'étend transversalement et à travers lequel la bande est passée et en ce qu'un rouleau de renvoi (29) pour la bande est logé de manière à pouvoir tourner dans la tête ou le cou du modèle, sous le plan de la fente de guidage précitée.

7. Modèle suivant l'une des revendications 1 à 6, caractérisé en ce que l'ouverture de bouche et/ou de nez est réalisée dans une partie (17′) agencée de manière échangeable dans la tête (16′) et en ce qu'elle présente une tubulure (31) faisant saillie à l'intérieur de la tête et présentant un dispositif de liaison (32, 33) pour l'embouchure de soufflage de la poche (1′).

8. Modèle suivant la revendication 7, caractérisé en ce que le dispositif de liaison présente un anneau de pinçage (33) pour pincer de manière fixe et étanche l'embouchure de soufflage sur la tubulure (31).

9. Modèle suivant l'une des revendications 1 à 8, caractérisé en ce qu'un premier rouleau d'écrasement (40) est agencé dans un appendice de cou de la cage thoracique (20) qui fait saillie dans la tête (16, 16′) et un deuxième rouleau d'écrasement (41) est agencé dans la tête, parallèlement au premier rouleau d'écrasement, en ce que la tête est capable de pivoter par rapport à l'appendice de cou vers l'avant et vers l'arrière dans une position d'obstruction ou respectivement une position de libération, les rouleaux d'écrasement (40, 41) se trouvant en contact mutuel dans la position d'obstruction, et en ce que l'imitation de trachée (3) s'étend entre les rouleaux d'écrasement.

10. Modèle suivant la revendication 9, caractérisé en ce que la périphérie des rouleaux d'écrasement est recouverte d'une matière flexible.

11. Bande continue de poches gonflables contiguës (1, 1′) à utiliser comme imitation d'un tractus respiratoire dans un modèle pour s'exercer à la respiration artificielle, dans laquelle chaque poche (1, 1′) présente une imitation de trachée (3) rétrécie, qui se raccorde à une embouchure de soufflage (2), et une imitation des poumons (4) qui s'élargit à nouveau, est rattachée à l'imitation de trachée et présente une extrémité fermée (6), les poches (1, 1′) étant enroulées à plat en une bobine (12), toutes les poches, à l'exception de la poche formant l'extrémité de déroulement de la bobine (12), étant chacune reliées de manière séparable par l'extrémité fermée à la poche voisine du côté de l'extrémité de déroulement.

12. Bande suivant la revendication 11, caractérisée en ce qu'à l'imitation des poumons (4) se rattache une imitation d'estomac (5) qui est reliée à l'imitation des poumons uniquement par un orifice étranglé (9).

13. Bande suivant l'une des revendications 11 et 12, caractérisée en ce qu'elle est constituée d'un conduit flexible à base d'une feuille en matière synthétique thermoplastique qui est disposée à plat et en ce que l'extrémité fermée de chaque poche (1, 1′) est formée par une soudure transversale (6) du conduit flexible.

14. Bande suivant l'une des revendications 12 et 13, caractérisée en ce que l'imitation d'estomac (5) est produite par une soudure transversale supplémentaire (8) qui est agencée à distance de la première soudure transversale (6) et qui présente une interruption (9) formant l'orifice étranglé.

15. Bande suivant l'une des revendications 11 à 14, caractérisée en ce que directement au voisinage de chaque première soudure transversale (6) s'étend une perforation (7) transversalement sur toute la largeur du conduit flexible, en qualité de ligne de séparation.

16. Bande suivant l'une des revendications 13 à 15, caractérisée en ce que, en partant de la première soudure transversale (6) ou respectivement de la ligne de séparation citée (7), des incisions (10) ou lignes de séparation de longueur prédéterminée, qui délimitent des parties de paroi repliables (2′) de l'embouchure de soufflage (2), s'étendent dans les bords opposés du conduit flexible suivant la direction longitudinale de la bande.
